# EUROPEAN PATENT APPLICATION

(11) **EP 4 542 275 A1**
(43) Date of publication of application: **23.04.2025**
(21) Application number: 23822808.4
(22) Date of filing: 27.04.2023
(51) Int. Cl.: G02B 6/42

(54) **OPTICAL MODULE**

(30) Priority: 15.06.2022 CN 202210677401
(71) Applicant: Innolight Technology (Chengdu) Ltd., Chengdu, Sichuan 610097 (CN)
(72) Inventor: WEI, Yin, Chengdu, Sichuan 610097 (CN); DENG, Xiuling, Chengdu, Sichuan 610097 (CN); SUN, Yuzhou, Chengdu, Sichuan 610097 (CN); HUANG, Qing, Chengdu, Sichuan 610097 (CN)
(74) Representative: Finnegan Europe LLP
(86) International application number: PCT/CN2023/091072
(87) International publication number: WO 2023/241237

(57) **Abstract**

An optical module (1). By means of a cooperative design of an emitting optical fiber (110) and an optical waveguide element (120) in an emitting optical fiber assembly (100), the optical waveguide element (120) can effectively filter out, among optical signals, those propagating in a high-order mode and retain, among the optical signals, those propagating in a fundamental mode, thereby reducing the length of the emitting optical fiber (110) and facilitating the integration of optical elements. **In** addition, when the emitting optical fiber (110) is a single-mode optical fiber, the fundamental mode spot diameter at a light output end of the emitting optical fiber (110) matches the fundamental mode spot diameter of an external multi-mode optical fiber (200); and when the emitting optical fiber (110) is a multi-mode optical fiber, the fundamental mode spot diameter at a light output end of the optical waveguide element (120) matches the fundamental mode spot diameter of the external multi-mode optical fiber (200), thereby ameliorating multipath interferences caused by mode spot diameter mismatching and ensuring the outcome of signal transmission. This can accommodate requirements of normal transmission in two different environments, i.e. a single-mode optical fiber and a multi-mode optical fiber (200), thereby effectively improving the performance of a multi-mode optical fiber (200) system in terms of its transmission rate or transmission distance.

## Description

The present application claims priority to the Chinese Patent Application No. 202210677401.5 filed with the Chinese Patent Office on June 15, 2022, entitled "Optical Module," which is incorporated herein by reference in its entirety.

### TECHNICAL FIELD

The present application relates to the field of optical communication technology, and more particularly, to an optical module.

### BACKGROUND ART

Currently, optical modules are typically used in single-mode optical fiber environments only or multi-mode optical fiber environments only. Limited by the constraint of modal dispersion, multi-mode optical fibers are unable to meet transmission requirements for higher speed or longer distance. In addition, there are special demands in the optical communication market for performance upgrade in terms of speed or distance for multi-mode optical fiber systems that have already been laid.

To achieve the upgrade, prior art combines single-mode optical fiber and multi-mode optical fiber systems. However, in a ferrule of an optical module, the length of a single-mode optical fiber is only about 3-5mm, which cannot effectively filter out optical signals propagating in a high-order mode within the single-mode optical fiber. As a multi-mode optical fiber supports the presence of multiple modes, optical signals in a high-order mode cannot be effectively filtered out, which results in a significant modal dispersion issue in a multi-mode optical fiber in an external optical fiber connector in a transmission process of optical signals. This prevents it from meeting transmission requirements such as higher speed or longer distance and affects the outcome of signal transmission.

### SUMMARY OF INVENTION

### TECHNICAL PROBLEM

An embodiment of the present application provides an optical module that can solve the problem that the outcome of multi-mode optical fiber transmission is impacted due to a single-mode optical fiber being unable to effectively filter out optical signals of a high-order mode in current multi-mode optical fiber transmission applications.

### TECHNICAL SOLUTION

An embodiment of the present application provides an optical module, comprising: a light emitting assembly; an emitting optical fiber assembly, light emitted from the light emitting assembly is emitted out through the emitting optical fiber assembly, wherein the emitting optical fiber assembly comprises: an emitting optical fiber, a light output end of the emitting optical fiber being used for joining with an external optical fiber connector; and an optical waveguide element, a light output end of the optical waveguide element being connected to a light input end of the emitting optical fiber, and the optical waveguide element being used for filtering out optical signals propagating in a high-order mode among optical signals transmitted from the light emitting assembly and transmitting optical signals propagating in a fundamental mode among the optical signals to the emitting optical fiber; wherein the light emitting assembly is optically connected to the external optical fiber connector through the emitting optical fiber assembly, and optical signals outputted by the light emitting assembly are transmitted to the external optical fiber connector through, sequentially, the optical waveguide element and the emitting optical fiber.

Optionally, the light emitting assembly comprises a single-mode laser capable of emitting single-mode laser light and a collimating lens, and the single-mode laser light emitted by the single-mode laser enters the emitting optical fiber assembly after being collimated by the collimating lens.

Optionally, the light emitting assembly further comprises a multiplexer, an isolator, and a coupling lens; wherein optical signals outputted by the single-mode laser are inputted into the emitting optical fiber assembly through the collimating lens, the multiplexer, the isolator, and the coupling lens.

Optionally, the optical module further comprises: a light receiving assembly; a receiving optical fiber assembly, wherein the receiving optical fiber assembly comprises a multi-mode receiving optical fiber and an light receiving interface for joining with an external optical fiber connector, the light receiving assembly is optically connected to the light receiving interface through the multi-mode receiving optical fiber, and optical signals from the external optical fiber connector are transmitted to the light receiving assembly through, sequentially, the light receiving interface and the multi-mode receiving optical fiber.

Optionally, the emitting optical fiber assembly further comprises: a light emitting interface, the light output end of the emitting optical fiber being optically connected to the external optical fiber connector through the light emitting interface, and optical signals outputted by the light emitting assembly being transmitted to the external optical fiber connector through, sequentially, the optical waveguide element, the emitting optical fiber, and the light emitting interface.

Optionally, the emitting optical fiber is a single-mode emitting optical fiber, the light output end of the emitting optical fiber is joined with the light emitting interface through a mode spot size converter, and the mode spot size converter is used for converting the fundamental mode spot diameter of the emitting optical fiber from 9-10µm to 12-15µm.

Optionally, the emitting optical fiber is a multi-mode emitting optical fiber, and the fundamental mode spot diameter of exiting light at the light output end of the optical waveguide element is 12-15µm.

Optionally, the emitting optical fiber is a multi-mode emitting optical fiber, the fundamental mode spot diameter of incident light at a light input end of the optical waveguide element is 9-10µm, the light output end of the optical waveguide element is joined with the light input end of the emitting optical fiber through a mode spot size converter, and the mode spot size converter is used for converting the fundamental mode spot diameter of exiting light at the light output end of the optical waveguide element from 9-10µm to 12-15µm.

Optionally, the emitting optical fiber is a multi-mode emitting optical fiber, and the fundamental mode spot diameter of incident light at a light input end and the fundamental mode spot diameter of exiting light at the light output end of the optical waveguide element are both 12-15µm.

Optionally, the optical waveguide element is a silicon optical waveguide element.

### ADVANTAGEOUS EFFECTS

An advantageous effect of the present application is that an optical module is provided. By means of a cooperative design of an emitting optical fiber and an optical waveguide element in an emitting optical fiber assembly, the optical waveguide element can effectively filter out, among optical signals, those propagating in a high-order mode and retain, among the optical signals, those propagating in a fundamental mode, thereby reducing the length of the emitting optical fiber and facilitating the integration of optical elements. In addition, when the emitting optical fiber is a single-mode optical fiber, the fundamental mode spot diameter at a light output end of the emitting optical fiber matches the fundamental mode spot diameter of an external multi-mode optical fiber; and when the emitting optical fiber is a multi-mode optical fiber, the fundamental mode spot diameter at a light output end of the optical waveguide element matches the fundamental mode spot diameter of the external multi-mode optical fiber, thereby ameliorating multipath interferences caused by mode spot diameter mismatching, optimizing light beam quality at an emitting end, reducing the impact of the high-order mode on the transmission; at the same time, a multi-mode technology is used at a receiving end, ensuring that the power of light received is not impacted and ensuring the outcome of signal transmission. This can accommodate requirements of normal transmission in two different transmission environments, i.e. a single-mode optical fiber and a multi-mode optical fiber, thereby effectively improving the performance of a multi-mode optical fiber system in terms of its transmission rate and transmission distance.

### DESCRIPTION OF THE DRAWINGS

In order to more clearly illustrate the technical solutions of the embodiments of the present application, the drawings used in the description of the embodiments are briefly introduced below. Obviously, the drawings described below are only some of the embodiments of the present application; for persons of skill in the art, other drawings can be obtained based on these drawings without creative work.
FIG. 1 is a structural diagram illustrating an optical module provided by one embodiment of the present application;
FIG. 1a is a sectional view at A-A of FIG. 1;
FIG. 1b is an enlarged diagram illustrating the structure at B of FIG. 1;
FIG. 2 is a diagram illustrating a connecting structure between an emitting optical fiber assembly in an optical module provided by one embodiment of the present application and an external multi-mode optical fiber;
FIG. 3 is a structural diagram illustrating coupling between an emitting optical fiber assembly in an optical module provided by one embodiment of the present application and optical signals generated by a laser through two lenses;
FIG. 4 is a structural diagram illustrating coupling between an emitting optical fiber assembly in an optical module provided by one embodiment of the present application and optical signals generated by a laser through three lenses;
FIG. 5 is a structural diagram illustrating a mode spot size converter in an optical module provided by one embodiment of the present application;
FIG. 6 is a diagram illustrating one form of implementation of an emitting optical fiber assembly in an optical module provided by one embodiment of the present application;
FIG. 7 is a diagram illustrating another form of implementation of an emitting optical fiber assembly in an optical module provided by one embodiment of the present application;
FIG. 8 is a diagram illustrating another form of implementation of an emitting optical fiber assembly in an optical module provided by one embodiment of the present application;
FIG. 9 is a sectional view along C-C of FIG. 8;
FIG. 10 is an enlarged diagram illustrating the structure at D of FIG. 9;
FIG. 11 is a diagram illustrating a connecting structure between an emitting optical fiber assembly in an optical module provided by another embodiment of the present application and an external multi-mode optical fiber;
FIG. 12 is a structural diagram illustrating coupling between an emitting optical fiber assembly in an optical module provided by another embodiment of the present application and a light beam generated by a laser through two lenses;
FIG. 13 is a structural diagram illustrating coupling between an emitting optical fiber assembly in an optical module provided by another embodiment of the present application and a light beam generated by a laser through three lenses.

### DESCRIPTION OF REFERENCE NUMERALS IN THE DRAWINGS:

1. optical module, 10. light emitting assembly, 11. single-mode laser, 12. collimating lens, 13. multiplexer, 14. isolator, 15. first periscope lens, 16. second periscope lens, 17. coupling lens;
20. receiving optical fiber assembly, 21. multi-mode receiving optical fiber, 22. light receiving interface, 23. first interface member, 231. first accommodating cavity, 24. first ferrule, 241, second accommodating cavity;
30. light receiving assembly, 31. photodetector, 32. lens combination;
100. emitting optical fiber assembly, 110. emitting optical fiber, 120. optical waveguide element, 130. light emitting interface, 140. second interface member, 141. second ferrule, 141a. second sleeve, 150. third interface member, 150a. third accommodating cavity, 150b. protective tail glue, 151. third ferrule, 151a. third sleeve, 152. end member, 152a. base, 152b. glass cover plate;
200. external multi-mode optical fiber.

### MODES FOR CARRYING OUT THE INVENTION

A clear and complete description of technical solutions in embodiments of the present application are provided below in conjunction with drawings in the embodiments of the present application. Obviously, the described embodiments are only some and not all embodiments of the present application. All other embodiments obtained by persons of skill in the art based on the embodiments in the present application without creative labor fall within the scope of protection of the present application. Moreover, it should be understood that the detailed embodiments described herein are only for the purpose of describing and explaining the present application, and are not intended to limit the present application. In the present application, unless otherwise stated, positional words used such as "above" and "below" generally refer to above and below an apparatus in its actual use or operating state, specifically referring to the orientation in the drawings; and "inside" and "outside" are in relation to the contour of the apparatus. Moreover, the terms "first" and "second" are used for descriptive purposes only and cannot be construed as indicating or implying relative importance or implicitly specifying the quantity of the technical feature referred to. Therefore, a feature defined as "first" or "second" may include one or more of such feature, either explicitly or implicitly.

The present application provides an optical module. By means of a cooperative design of an emitting optical fiber and an optical waveguide element in an emitting optical fiber assembly, the optical waveguide element can effectively filter out, among optical signals, those propagating in a high-order mode and retain, among the optical signals, those propagating in a fundamental mode, thereby reducing the length of the emitting optical fiber and facilitating the integration of optical elements. In addition, when the emitting optical fiber is a single-mode optical fiber, the fundamental mode spot diameter at a light output end of the emitting optical fiber matches the fundamental mode spot diameter of an external multi-mode optical fiber; and when the emitting optical fiber is a multi-mode optical fiber, the fundamental mode spot diameter at a light output end of the optical waveguide element matches the fundamental mode spot diameter of the external multi-mode optical fiber, thereby ameliorating multipath interferences caused by mode spot diameter mismatching, optimizing light beam quality at an emitting end, reducing the impact of the high-order mode on the transmission; at the same time, a multi-mode technology is used at a receiving end, ensuring that the power of light received is not impacted and ensuring the outcome of signal transmission. This can accommodate requirements of normal transmission in two different environments, i.e. a single-mode optical fiber and a multi-mode optical fiber, thereby effectively improving the performance of a multi-mode optical fiber system in terms of its transmission rate or transmission distance.

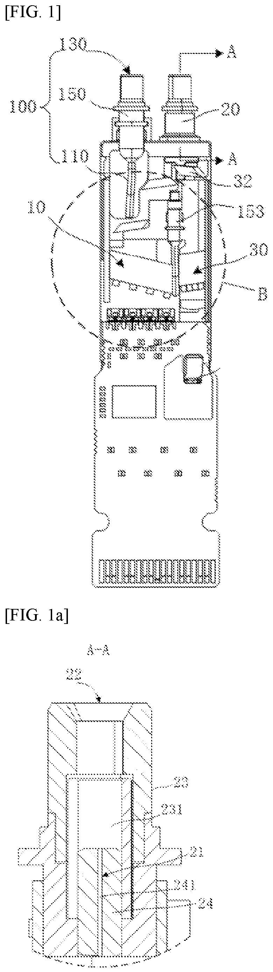

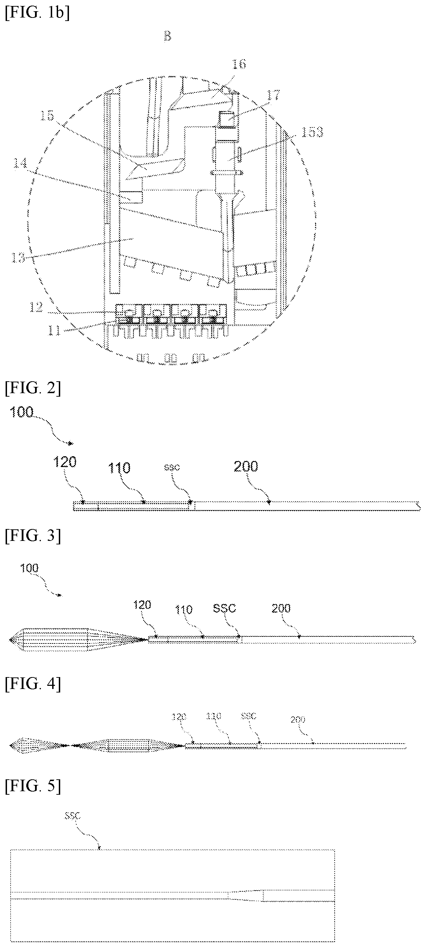

In one embodiment of the present application, referring to FIG. 1, an optical module 1 comprises: a light emitting assembly 10 and an emitting optical fiber assembly 100.

The light emitting assembly 10 is used for transmitting optical signals to an external optical fiber connector, in order to achieve optical signal exchange between the optical module and the external communication device.

Referring to FIG. 2, the emitting optical fiber assembly 100 comprises an emitting optical fiber 110 and an optical waveguide element 120. Alight output end of the emitting optical fiber 110 is joined with an external multi-mode optical fiber 200 in an external optical fiber connector (not shown in the figure). A light input end of the emitting optical fiber 110 is connected to a light output end of the optical waveguide element 120. A light incident end of the optical waveguide element 120 is used for receiving optical signals. The optical waveguide element 120, the emitting optical fiber 110, and the external multi-mode optical fiber 200 are arranged sequentially along the direction of optical signal propagation. The optical waveguide element 120 is used for filtering out optical signals propagating in a high-order mode among optical signals received and transmitting optical signals propagating in a fundamental mode among the optical signals to the emitting optical fiber 110. The light emitting assembly 10 is optically connected to the external optical fiber connector through the emitting optical fiber assembly 100. Optical signals outputted by the light emitting assembly 10 are transmitted to the external optical fiber connector through, sequentially, the optical waveguide element 120 and the emitting optical fiber 110.

Here, the light emitting assembly 10 comprises a single-mode laser 11, a collimating lens 12, a multiplexer 13, an isolator 14, a first periscope lens 15, a second periscope lens 16, and a coupling lens 17. Optical signals outputted by the single-mode laser 11 are transmitted to a light input end of the optical waveguide element 120 through, sequentially, the collimating lens 12, the multiplexer 13, the isolator 14, the first periscope lens 15, the second periscope lens 16, and the coupling lens 17, and then transmitted to the external optical fiber connector through the emitting optical fiber 110.

In one implementation of this embodiment, referring to FIG. 1b and FIG. 3, the collimating lens 12 and the coupling lens 17 are arranged with a space in between along the direction of optical signal propagation, forming a dual-lens system. This dual-lens system forms the optical signal propagation pattern shown in FIG. 3.

Here, optical signals entering the optical waveguide element 120 include optical signals propagating in a high-order mode and optical signals propagating in a fundamental mode. The dual-lens system composed of the collimating lens 12 and the coupling lens 17 causes optical signals emitted by the single-mode laser 11 to be coupled into the optical waveguide element 120 through the light incident end after passing through the collimating lens 12 and the coupling lens 17. As a result, a majority of optical signal energy of the optical signals emitted by the single-mode laser 11 is concentrated in the optical signals propagating in the fundamental mode, while less optical signal energy enters the optical signals propagating in the high-order mode. In another implementation of the present embodiment, referring to FIG. 3, there are three lenses in the light emitting assembly 10, forming a triple-lens system. The triple-lens system can ensure that a majority of the optical signal energy of the optical signals emitted by the single-mode laser 11 is concentrated in the optical signals propagating in the fundamental mode, while less optical signal energy enters the optical signals propagating in the high-order mode.

However, if the optical signals propagating in the high-order mode are not filtered out, the optical signals propagating in the high-order mode and the optical signals propagating in the fundamental mode will enter the external multi-mode optical fiber 200 of the external optical fiber connector together through the emitting optical fiber 110. The external multi-mode optical fiber 200 supports multiple modes of optical signals (the high-order mode and the fundamental mode), and the optical signals propagating in the high-order mode cannot be effectively filtered out in the external multi-mode optical fiber 200. Therefore, at its interface, the optical signals propagating in the high-order mode and the optical signals propagating in the fundamental mode are prone to multipath interference (MPI). Especially, a MPO port in a link, compared with an LC port, has worse alignment tolerance and is more prone to multipath interference, resulting in bit errors, which affects the outcome of signal transmission.

In this embodiment, the emitting optical fiber 110 is a single-mode optical fiber, and the attenuation of residual optical signals transmitting in a high-order mode in the single-mode optical fiber is correlated to the length of the single-mode optical fiber. The residual optical signals transmitting in the high-order mode can be attenuated and filtered by a certain length of single-mode optical fiber. In general, the length of a single-mode optical fiber is 3-5mm. A longer single-mode optical fiber is needed to attenuate and filter the optical signals transmitting in the high-order mode in the single-mode optical fiber. The length of the single-mode optical fiber needs to be greater than 5mm in order to attenuate and filter the optical signals transmitting in the high-order mode in the single-mode optical fiber. An even longer single-mode optical fiber, such as one that is 100mm, is needed to achieve a very good outcome in filtering out the optical signals propagating in the high-order mode. Such a length of the emitting optical fiber will affect its integration in the optical module and increase the space occupied by the optical module.

In this embodiment, the optical waveguide element 120 is added to the light input end of the emitting optical fiber 110, and the optical waveguide element 120 can effectively filter out, among the optical signals, those propagating in the high-order mode. Among the optical signals that have gone through filtering by the optical waveguide element 120, a vast majority are optical signals that propagate in the fundamental mode. Therefore, the length of the emitting optical fiber 110 does not need to be excessively long, and the length of the emitting optical fiber 110 can be 3-5mm, thereby shortening the overall length of the emitting optical fiber assembly 100 and facilitating subsequent integration of the emitting optical fiber assembly 100 into the optical module 1.

In addition, the fundamental mode spot diameter of a single-mode emitting optical fiber used as the emitting optical fiber 110 does not match the fundamental mode spot diameter of the external multi-mode optical fiber 200. For example, the fundamental mode spot diameter of the single-mode optical fiber used as the emitting optical fiber 110 is 9-10µm, and the fundamental mode spot diameter of the external multi-mode optical fiber 200 is 12-15µm; the fundamental mode spot diameter of the external multi-mode optical fiber 200 is greater than the fundamental mode spot diameter of the emitting optical fiber 110. If the optical signals, after the high-order mode is filtered out by the optical waveguide element 120, directly enter the external multi-mode optical fiber 200 through a light exiting end of the emitting optical fiber 110, mode spot mismatch (the fundamental mode spot diameter at the light exiting end of the emitting optical fiber 110 does not match the fundamental mode spot diameter of the external multi-mode optical fiber 200 when converted) will cause some of the optical signals to be excited to propagate in a high-order mode again. These excited optical signals propagating in the high-order mode and the optical signals propagating in the fundamental mode will create significant modal dispersion in the external multi-mode optical fiber 200, affecting the outcome of communication.

In order to match the fundamental mode spot diameter at a light output end of the single-mode emitting optical fiber used as the emitting optical fiber 110 and the fundamental mode spot diameter of the external multi-mode optical fiber 200, referring to FIGs 2 and 5, one implementation used in this embodiment is to configure a mode spot size converter SSC at the light output end of the emitting optical fiber 110. The mode spot size converter SSC is used for converting the fundamental mode spot diameter at the light exiting end of the emitting optical fiber 110 to match the fundamental mode spot diameter of the external multi-mode optical fiber 200. For example, through the mode spot size converter SSC, the fundamental mode spot diameter at the light output end of the emitting optical fiber 110 is converted from 9-10µm to 12-15µm to match the fundamental mode spot diameter of the external multi-mode optical fiber 200. As a result, once the optical signals propagating in the fundamental mode, after going through filtering by the optical waveguide element 120, enter the external multi-mode optical fiber 200, they will not excite high-order mode optical signals and therefore will not create modal dispersion, ensuring the outcome of communication.

In order to match the fundamental mode spot diameter at the light output end of the single-mode emitting optical fiber used as the emitting optical fiber 110 with the fundamental mode spot diameter of the external multi-mode optical fiber 200, one implementation of this embodiment uses thermal expansion or fused tapering to process an end surface of the light exiting end of the emitting optical fiber 110, so that the fundamental mode spot diameter of exiting optical signals at the light exiting end of the emitting optical fiber 110 matches the fundamental mode spot diameter of the external multi-mode optical fiber 200. This implementation does not require the addition of the mode spot size converter SSC. A selection between the two implementations can be made according to actual needs. Moreover, the present application is not limited to the processing methods of thermal expansion and fused tapering; alternatively, other processing methods can be selected according to actual needs, as long as the fundamental mode spot diameter of the exiting optical signals at the light exiting end of the emitting optical fiber 110 matches the fundamental mode spot diameter of the external multi-mode optical fiber 200.

The so-called "match" can refer to that the fundamental mode spot diameter at the light output end of the emitting optical fiber 110 after conversion by the mode spot size converter SSC is consistent with the fundamental mode spot diameter of the external multi-mode optical fiber 200. For example, the fundamental mode spot diameter at the light output end of the emitting optical fiber 110 after conversion by the mode spot size converter SSC is 12µm, and the fundamental mode spot diameter of the external multi-mode optical fiber 200 is 12µm. It can also refer to that the fundamental mode spot diameter at the light output end of the emitting optical fiber 110 after conversion by the mode spot size converter SSC falls within a range of the fundamental mode spot diameter of the external multi-mode optical fiber 200. For example, the fundamental mode spot diameter at the light output end of the emitting optical fiber 110 after conversion by the mode spot size converter SSC is 12µm, and can be joined with an external multi-mode optical fiber 200 whose fundamental mode spot diameter is 12-15µm. Here, the mode spot diameter is also known as the mode field diameter (MFD).

In addition, in this embodiment, the fundamental mode spot diameter at a light exiting end of the optical waveguide element 120 can be designed to match the fundamental mode spot diameter of the emitting optical fiber 110; that is, the fundamental mode spot diameter at the light exiting end of the optical waveguide element 120 is 9-10µm.

Here, in this embodiment, the optical waveguide element 120 is a silicon optical waveguide element (PIC). In other implementations, other forms of optical waveguide elements can be used, but they need to have the function of filtering out, among optical signals, those propagating in a high-order mode.

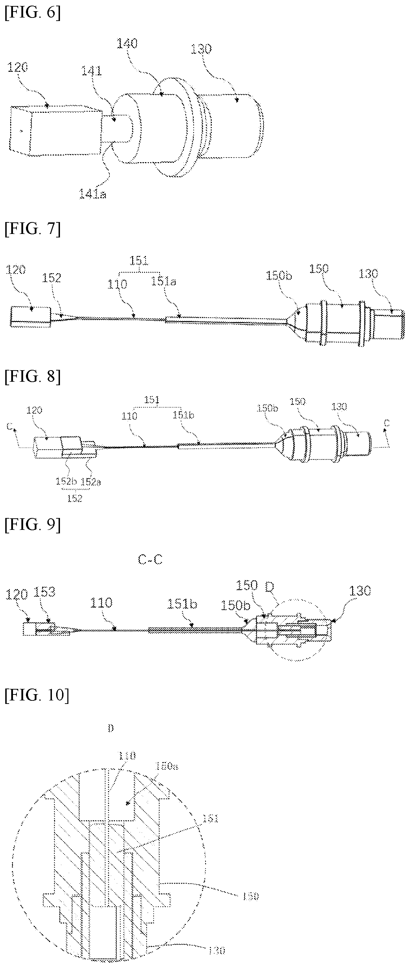

Referring to FIG. 6, in one implementation form of the emitting optical fiber assembly 100 provided in this embodiment, the emitting optical fiber assembly 100 comprises an optical waveguide element 120, an emitting optical fiber 110, a second interface member 140, and a light emitting interface 130 arranged sequentially along the direction of optical signal propagation. The light emitting interface 130 is configured at a light output end of the second interface member 140, and the second interface member 140 is a light emitting adapter (Tx receptacle). A second ferrule 141 is configured at a light input end of the second interface member 140. The second ferrule 141 comprises a second sleeve 141a and a fiber core (not shown in the figure) inserted into the second sleeve 141a. The emitting optical fiber 110 constitutes the fiber core of the second ferrule 141. One end of the second sleeve 141a is connected to a side of the optical waveguide element 120 oriented towards the second interface member 140, and another end of the second sleeve 141a is connected to a side of the second interface member 140 farther away from the light emitting interface 130. A light input end of the emitting optical fiber 110 is the light input end of the second ferrule 141. An end surface of a light output end of the optical waveguide element 120 is coupled and cured to an end surface of the light input end of the second ferrule 141 through an optical path glue, and the light input end of the emitting optical fiber 110 is connected to the light output end of the optical waveguide element 120 to propagate optical signals. A light output end of the emitting optical fiber 110 extends into an inside of the second interface member 140 and is optically connected to the light emitting interface 130. The light output end of the emitting optical fiber 110 is optically connected to an external multi-mode optical fiber 200 inside an external optical fiber connector through the light emitting interface. Here, when a mode spot size converter SSC is configured at the light output end of the emitting optical fiber 110, the mode spot size converter SSC is configured inside the second interface member 140. A light input end of the mode spot size converter SSC is connected to the light output end of the emitting optical fiber 110, and a light output end of the mode spot size converter SSC corresponds to the light output end of the second interface member 140, in order to achieve conversion of the fundamental mode spot diameter at the light output end of the emitting optical fiber 110.

Referring to FIGs 7 to 10, in another implementation form of the emitting optical fiber assembly 100 provided in this embodiment, the emitting optical fiber assembly 100 comprises an optical waveguide element 120, an emitting optical fiber 110, a third interface member 150, and a light emitting interface 130 arranged sequentially along the direction of optical signal propagation.

Referring to FIGs 7 to 10, the light emitting interface 130 is configured at a light output end of the third interface member 150. A third accommodating cavity 150a connecting to the light emitting interface 130 is configured inside the third interface member 150. The light emitting interface 130 is configured at the light output end of the third interface member 150. The third interface member 150 is joined with an external multi-mode optical fiber 200 in an external optical fiber connector through the light emitting interface 130. A third ferrule 151 is configured at a light input end of the third interface member 150. The third ferrule 151 comprises a third fiber core. The emitting optical fiber 110 constitutes the third fiber core. A light output end of the emitting optical fiber 110 extends into an inside of the third interface member 150 and is embedded in the third accommodating cavity 150a. The light output end of the emitting optical fiber 110 is optically connected to the light emitting interface 130.

Additionally, the emitting optical fiber assembly 100 further comprises: protective tail glue 150b, a third sleeve 151a, and an end member 152. The protective tail glue 150b is configured on a side of the third interface member 150 farther away from the light emitting interface 130. The protective tail glue 150b coats the periphery of the emitting optical fiber 110. Specifically, the protective tail glue 150b coats an optical fiber segment of the emitting optical fiber 110 that is outside the third interface member 150 and adjacent to the third interface member 150, providing protection for this optical fiber segment. The third sleeve 151a is configured on a side of the protective tail glue 150b farther away from the third interface member 150. The third sleeve 151a is configured to sleeve around the periphery of the emitting optical fiber 110. A light input end of the emitting optical fiber 110 is integrated in the end member 152. The light input end of the emitting optical fiber 110 is j oined with a light output end of the optical waveguide element 120 through the end member 152. An end surface of the light output end of the optical waveguide element 120 is coupled and cured to the end member 152 through optical path glue, and optical signals outputted by the light emitting assembly 10 are inputted into the emitting optical fiber 110 through, sequentially, the optical waveguide element 120 and the end member 152.

Specifically, in one implementation, referring to FIGs 7 to 10, the end member 152 is a glass head, and the light input end of the emitting optical fiber 110 is packaged inside the glass head. In another implementation, as shown in FIG. 8, the end member 152 comprises a base 152a and a glass cover plate 152b. A V-groove is configured on the base 152a to accommodate the light input end of the emitting optical fiber 110, and the glass cover plate 152b is configured to cover the base 152a to package the light input end of the emitting optical fiber 110.

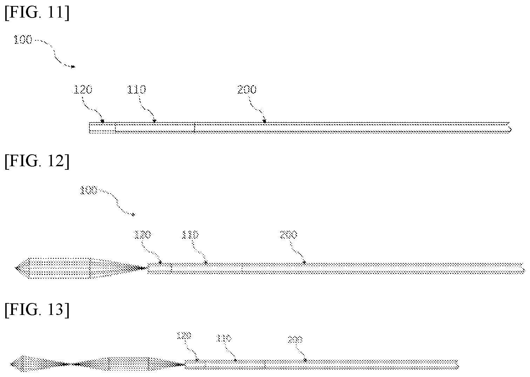

Moreover, in another implementation of this embodiment, referring to FIGs 11 to 13, the emitting optical fiber 110 in the emitting optical fiber assembly 100 is a multi-mode optical fiber. By adding the optical waveguide element 120 at the light input end of the emitting optical fiber 110, the optical waveguide element 120 can effectively filter out, among optical signals, those propagating in a high-order mode. For the implementation of the emitting optical fiber assembly 100 in this implementation, refer to the previous description of FIGs 6 to 9; it will not be repeated here.

Additionally, in order to match the fundamental mode spot diameter of a multi-mode emitting optical fiber used as the emitting optical fiber 110 with the fundamental mode spot diameter of the external multi-mode optical fiber 200, one implementation used in this embodiment is to match the fundamental mode spot diameter at the light output end of the optical waveguide element 120 with the fundamental mode spot diameter of the external multi-mode optical fiber 200. In another implementation of this embodiment, the fundamental mode spot diameter at the light input end of the optical waveguide element 120 can be configured to match the fundamental mode spot diameter of a single-mode optical fiber. For example, the fundamental mode spot diameter at the light input end of the optical waveguide element 120 is configured to be 9-10µm. A mode spot size converter (not shown in the figure) is configured in the optical waveguide element 120, and the fundamental mode spot diameter at the light input end is converted through this mode spot size converter from 9-10µm to 12-15µm to match the fundamental mode spot diameter of the external multi-mode optical fiber 200, so that the fundamental mode spot diameter at the light output end of the optical waveguide element 120 matches the fundamental mode spot diameter of the external multi-mode optical fiber 200. In yet another implementation of this embodiment, the fundamental mode spot diameter at the light input end and the fundamental mode spot diameter at the light output end of the optical waveguide element 120 can both be configured to be 12-15µm, matching the fundamental mode spot diameter of the external multi-mode optical fiber 200.

Additionally, referring to FIG. 1, FIG. 1a, and FIG. 1b, the optical module 1 further comprises a light receiving assembly 30 and a receiving optical fiber assembly 20.

Referring to FIG. 1 and FIG. 1a, the receiving optical fiber assembly 20 comprises a multi-mode receiving optical fiber 21 and a light receiving interface 22 for joining with an external optical fiber connector. The light receiving assembly 30 is optically connected to the light receiving interface 22 through the multi-mode receiving optical fiber 21, and optical signals from the external optical fiber connector are transmitted to the light receiving assembly 30 through, sequentially, the light receiving interface 22 and the multi-mode receiving optical fiber 21, so as to achieve optical signal exchange between the optical module and the external optical fiber connector.

The receiving optical fiber assembly 20 in this embodiment uses the multi-mode receiving optical fiber 21 and can accommodate both single-mode and multi-mode transmission environments. In other words, optical signals transmitted by an external communication device through either an external single-mode optical fiber or an external multi-mode optical fiber can be received by the multi-mode receiving optical fiber 21 in this embodiment, and be transmitted to the light receiving assembly 30 by the multi-mode receiving optical fiber 21. In other words, the emitting optical fiber 110 of the emitting optical fiber assembly 100 in this embodiment of the present application can use either a single-mode emitting optical fiber or a multi-mode emitting optical fiber, and the receiving optical fiber assembly 20 uses a multi-mode receiving optical fiber 21. This allows the optical module 1 provided in this embodiment of the present application to accommodate both single-mode and multi-mode transmission environments; that is, the optical module of this embodiment of the present application can be applied both in a single-mode transmission environment and in a multi-mode transmission environment. In contrast, a traditional optical module usually can be applied in a single-mode transmission environment only, meaning that both the transmitting and receiving portions of the traditional optical module use single-mode optical fibers; or be applied in a multi-mode transmission environment only, meaning that both the transmitting and receiving portions of the traditional optical module use multi-mode optical fibers.

Furthermore, the receiving optical fiber assembly 20 further comprises a first interface member 23. The light receiving interface 22 is configured at an end portion of the first interface member 23, and a first accommodating cavity 231 connected to the light receiving interface 22 is configured inside the first interface member 23. The receiving optical fiber assembly 20 further comprises a first ferrule 24. The first ferrule 24 is embedded in the first accommodating cavity 231, and a second accommodating cavity 241 connected to the first accommodating cavity 231 is configured inside the first ferrule 24. The multi-mode receiving optical fiber 21 is embedded in the second accommodating cavity 241, and the multi-mode receiving optical fiber 21 forms a fiber core of the first ferrule 24.

Optionally, as shown in FIG. 1, the light receiving assembly 30 comprises a photodetector 31 (PD) and a lens combination 32. The photodetector 31 is optically connected to the receiving optical fiber assembly 20 through the lens combination 32. Optical signals transmitted by the external communication device are inputted to the receiving optical fiber assembly 20, and transmitted to the photodetector 31 through the lens combination 32. In this embodiment, the receiving optical fiber assembly 20 uses the multi-mode receiving optical fiber 21, so that regardless of whether the external transmission environment is a multi-mode transmission environment or a single-mode transmission environment, all optical signals (high-order mode optical signals, fundamental mode optical signals) transmitted by the external communication device can be fully received by the multi-mode receiving optical fiber 21 and transmitted to the photodetector 31, thereby minimizing change in the responsivity of the photodetector 31 and further reducing the bit error rate. If high-order mode optical signals among the optical signals transmitted by the external communication device are filtered out, it will cause a change in the responsivity of the photodetector 31, which in turn results in bit errors.

The optical module provided by embodiments of the present application are described in detail above, and specific examples are used herein to explain the principles and implementation of the present application; the description of the above embodiments is only used to assist in the understanding of the methods and core ideas of the present application. Meanwhile, for persons of skill in the art, there will be changes in the specific embodiment modes and the applicable scope based on the idea of the present application. Therefore, the content of this specification should not be construed as a limitation of the present application.

## Claims

1. An optical module, **characterized in that** it comprises:
a light emitting assembly;
an emitting optical fiber assembly, light emitted from the light emitting assembly being emitted out through the emitting optical fiber assembly, wherein
the emitting optical fiber assembly comprises:
an emitting optical fiber, a light output end of the emitting optical fiber being used for joining with an external optical fiber connector; and
an optical waveguide element, a light output end of the optical waveguide element being connected to a light input end of the emitting optical fiber, and the optical waveguide element being used for filtering out optical signals propagating in a high-order mode among optical signals transmitted from the light emitting assembly and transmitting optical signals propagating in a fundamental mode among the optical signals to the emitting optical fiber; wherein the light emitting assembly is optically connected to the external optical fiber connector through the emitting optical fiber assembly, and optical signals outputted by the light emitting assembly are transmitted to the external optical fiber connector through, sequentially, the optical waveguide element and the emitting optical fiber.

2. The optical module according to claim 1, **characterized in that** the light emitting assembly comprises a single-mode laser capable of emitting single-mode laser light and a collimating lens, and the single-mode laser light emitted by the single-mode laser enters the emitting optical fiber assembly after being collimated by the collimating lens.

3. The optical module according to claim 2, **characterized in that** the light emitting assembly further comprises a multiplexer, an isolator, and a coupling lens;
wherein optical signals outputted by the single-mode laser are inputted into the emitting optical fiber assembly through the collimating lens, the multiplexer, the isolator, and the coupling lens.

4. The optical module according to claim 1, **characterized in that** the optical module further comprises:
a light receiving assembly;
a receiving optical fiber assembly, wherein
the receiving optical fiber assembly comprises a multi-mode receiving optical fiber and an light receiving interface for joining with an external optical fiber connector,
the light receiving assembly is optically connected to the light receiving interface through the multi-mode receiving optical fiber, and optical signals from the external optical fiber connector are transmitted to the light receiving assembly through, sequentially, the light receiving interface and the multi-mode receiving optical fiber.

5. The optical module according to claim 1, **characterized in that**
the emitting optical fiber assembly further comprises:
a light emitting interface, the light output end of the emitting optical fiber being optically connected to the external optical fiber connector through the light emitting interface, and optical signals outputted by the light emitting assembly being transmitted to the external optical fiber connector through, sequentially, the optical waveguide element, the emitting optical fiber, and the light emitting interface.

6. The optical module according to claim 1, **characterized in that**
the emitting optical fiber is a single-mode emitting optical fiber, the light output end of the emitting optical fiber is joined with the light emitting interface through a mode spot size converter, and the mode spot size converter is used for converting the fundamental mode spot diameter of the emitting optical fiber from 9-10µm to 12-15µm.

7. The optical module according to claim 1, **characterized in that**
the emitting optical fiber is a multi-mode emitting optical fiber, and the fundamental mode spot diameter of exiting light at the light output end of the optical waveguide element is 12-15µm.

8. The optical module according to claim 1, **characterized in that**
the emitting optical fiber is a multi-mode emitting optical fiber, the fundamental mode spot diameter of incident light at a light input end of the optical waveguide element is 9-10µm, the light output end of the optical waveguide element is joined with the light input end of the emitting optical fiber through a mode spot size converter, and the mode spot size converter is used for converting the fundamental mode spot diameter of exiting light at the light output end of the optical waveguide element from 9-10µm to 12-15µm.

9. The optical module according to claim 1, **characterized in that**
the emitting optical fiber is a multi-mode emitting optical fiber, and the fundamental mode spot diameter of incident light at a light input end and the fundamental mode spot diameter of exiting light at the light output end of the optical waveguide element are both 12-15µm.

10. The optical module according to claim 1, **characterized in that** the optical waveguide element is a silicon optical waveguide element.
